# EUROPEAN PATENT APPLICATION

(11) **EP 0 939 545 A2**
(43) Date of publication of application: **01.09.1999**
(21) Application number: 99103115.4
(22) Date of filing: 17.02.1999
(51) Int. Cl.: H04N 5/00

(54) **Video service system**

(30) Priority: 27.02.1998 JP 4673698
(71) Applicant: Hitachi, Ltd., Chiyoda-ku, Tokyo 101-8010 (JP)
(72) Inventor: Suzuki, Toshiaki, Kokubunji-shi (JP); Yoshizawa, Satoshi c/o Hitachi America Ltd., Santa Clara, CA 95054 (US); Mimura, Itaru, Sayama-shi (JP); Ikezawa, Mitsuru, Asaka-shi (JP); Kameyama, Tatsuya, Hachioji-shi (JP)
(74) Representative: Strehl Schübel-Hopf & Partner

(57) **Abstract**

A video server encapsulates video program data, encoded by the scalable coding method, into packets, assigns a flag to the packet for each layer and transmits the packet to a video quality control equipment (20) existing on an edge of a network branching to client terminals (11 and 12). The video quality control equipment (20) duplicates and converts video program data, encoded by the scalable coding method, according to quality modes demanded from the client terminals (11 and 12), and serves the video program data thus duplicated and converted to the respective client terminals (11 and 12).

## Description

### BACKGROUND OF THE INVENTION

The present invention relates to a serving system for serving a video program including video data, acoustic data or the like, and particularly relates to an apparatus for encapsulating a broadcasting type video program into packets and transmitting them.

As a conventional video data transmission apparatus, there is hitherto known a system for encapsulating video data into packets for each wavelet bandwidth as disclosed in JP-A-7-15609 (laid-open on January 17, 1995). This prior-art technology is intended to provide video data transmission method and video data transmission apparatus, video data reception apparatus in which a video data is transmitted according to a transmission capability of a network for video data transmission on a video data reception side and a decoding performance of a video data reception apparatus even when the transmission capability of the network for video data transmission on the video data reception side and the decoding performance of the video data reception apparatus are inferior to a transmission capability of a network for video data transmission on a video data transmission side and a coding performance of a video data transmission apparatus. As a system that may be realized in actual practice, in a video data transmission apparatus, a video data is encapsulated into packets for each wavelet bandwidth, a predetermined flag is set for each packet and a resultant packet is then transmitted. When a network for transmitting video data is based on the ATM (Asynchronous Transfer Mode), video data is transmitted with priority information added to a header of a cell. On a network for transmitting video data, upon congestion of the network, a cell with a high priority is preferentially transmitted. A video data reception apparatus is permitted to reproduce video data according to a processing ability on the reception side by selecting and decoding only necessary video data, according to a decoding performance, based on a flag of received video data.

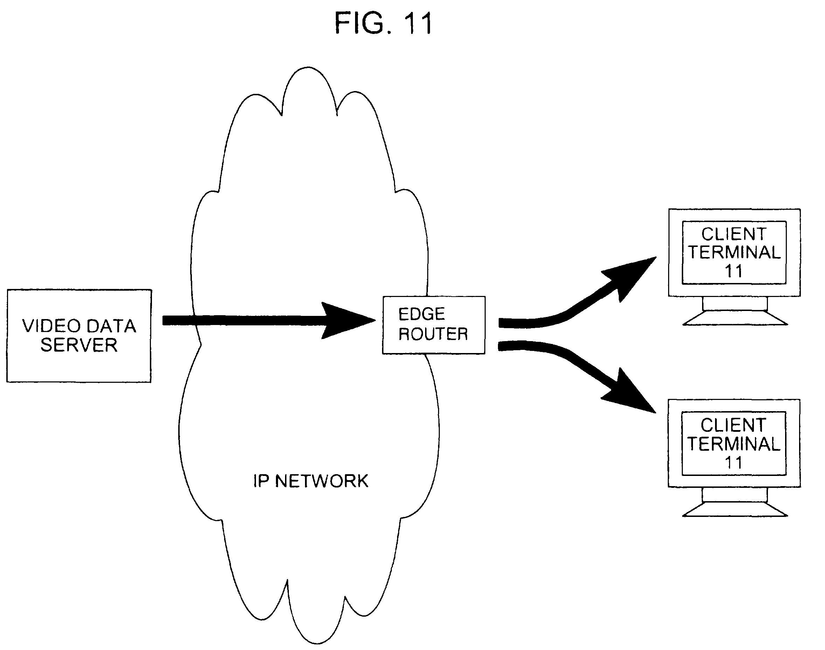

On the other hand, as a system for serving video data by using a network, there is known a multicast system using an IP (Internet Protocol) network. While the IP multicast system which serves video data serves same video data to a plurality of reception apparatus, streams of the number corresponding to the number of reception apparatus are not served from a video data serving apparatus but the video stream branches to a necessary number at a tree-like branching point in the network, thereby resulting in the same video data being served to a plurality of reception apparatus. Specifically, when there are provided two video data reception apparatus as shown in FIG. 11, two video data streams are not served from a video data server as a transmission apparatus but a video data stream is duplicated at an edge router on a network where the network finally branching to the two client terminals, thereby resulting in the same video data stream being served to the two client terminals as reception apparatus. The video data is transmitted as described above, whereby a limited transmission capacity of the network may be utilized effectively.

JP-A-4-003684 (laid-open on January 8, 1992) discloses an apparatus for encoding a motion picture with a variable rate for use in a videophone, video conference or the like.

JP-A-9-116551 (laid-open on May 2, 1997) discloses a data packet transmission method and apparatus in which data packets are transmitted/received through an ATM network.

JP-A-10-023418 (laid-open on January 23, 1998), JP-A-9-247676 (laid-open on September 19, 1997) and JP-A-10-032608 (laid-open on February 3, 1998) disclose a packet video rate conversion apparatus, which is particularly adapted for video conference communication over a network.

### SUMMARY OF THE INVENTION

However, when the above-described conventional technology is applied to a video program service system, the following inconveniences may be encounted.

When video data is wavelet-coded and transmitted, the video transmission apparatus, according to JP-A-7-15609 assigns a flag to a data transmitting packet for each band and transmits resultant data, the reception apparatus decodes and reproduces only data having a packet with a necessary flag based on a reproduction capability. For example, let us assume a video program service system in which the charging is graded by a level of reproduction quality (picture quality, smoothness of motion, etc.) of video data. Even when a reception apparatus has a video data reproduction capability high enough to reproduce full data transmitted from the video program service system, a viewer may not desire such a high reproduction quality. In such a case, it is desired that video data should be reproduced with a reproduction quality which meets with viewer's requirements, in addition to the processing capability of the reception apparatus. However, conventionally, the reproduction quality of video data depended upon only the processing capability of the reception apparatus and the video data could not be reproduced with the reproduction quality which meets with viewer's requirements.

Next, when there are provided a plurality of video program reception apparatus, according to the conventional IP multicast system, video data is duplicated at a branching point, and the same video data is served to a plurality of reception apparatus. Therefore, the conventional IP multicast system may not be able to serve video programs with different qualities to a plurality of video program reception apparatus. Moreover, according to the conventional IP multicast system, when a plurality of video program reception apparatus demand to transmit the same video program with different reproduction qualities, video data of the same quality, in other words, video data of the same data transmission rate is transmitted to a plurality of video program reception apparatus. As a result, a plurality of video program reception apparatus cannot reproduce a video program with different quality levels depending on viewer's requests.

Therefore, an object of the present invention is to provide a video program transmission and reception system in which a video program with a plurality of qualities can be reproduced from one video stream when a video program is transmitted from a video server for reproduction.

It is another object of the present invention to provide a video program transmission and reception system in which, when there are provided a plurality of video program reception apparatus, a video stream with a necessary quality is duplicated by an edge router at edges branching to the plurality of reception apparatus on the network and served thereto.

According to an aspect of the present invention, in a video program service system, an outputted video program is layered-coded, layered-coded video and acoustic data are stored and held in a video server as a video program output apparatus, the layered-coded data are encapsulated into packets for service, a flag is assigned to the to-be-served packets for each layer and resultant packets are transmitted. Further, a data rate of the layered-coded data is measured for each layer, a program data rate of each to-be-served video program quality is calculated and stored in the video program output apparatus, and information on relation between the video data rate for each to-be-served video program quality and the flag of the packet for transmitting the data necessary for reproducing each to-be-served video program quality is transmitted similarly to the above-described video data.

According to another aspect of the present invention, in a video program reception apparatus, a received video program quality is demanded and a quality of a to-be-received video program is designated.

According to another aspect of the present invention, in a reception apparatus, picture sizes of a plurality of displayed video programs are designated and displayed individually, and a video program which is displayed in maximum size among a plurality of displayed video programs is demanded to be served with a high quality so that video programs of sizes other than the maximum size are demanded to be served with a low quality.

According to another aspect of the present invention, in a reception apparatus, display positions of a plurality of displayed video programs are designated and displayed individually, a video program which is displayed on the front plane among a plurality of displayed video programs is demanded to be served with a high quality, and video programs displayed on planes other than the front plane are demanded to be served with a low quality.

### BRIEF DESCRIPTION OF THE DRAWINGS

FIG. 1 is a block diagram showing a multi-quality layered video service system according to an embodiment of the present invention;
FIG. 2 is a block diagram showing an encoding section in an embodiment of the present invention;
FIG. 3 is a diagram showing a relationship between coded layers and flags;
FIG. 4 is a diagram showing a relationship between a motion prioritized quality and a data transmission rate provided by a video server according to an embodiment of the present invention;
FIG. 5 is a diagram showing a relationship between a resolution prioritized quality and a data transmission rate provided by a video server according to an embodiment of the present invention;
FIG. 6 is a pictorial representation illustrating a state in which examples of video programs that can be selected are displayed on a display screen of a client terminal in an embodiment of the present invention;
FIG. 7 is a pictorial representation illustrating a state in which examples of video quality that can be selected are displayed on a display screen of a client terminal in an embodiment of the present invention;
FIG. 8 is a pictorial representation illustrating a state in which a client terminal displays received video programs in different display size in an embodiment of the present invention;
FIG. 9 is a pictorial representation illustrating a state in which a client terminal displays received video programs in such a manner that display positions overlap with each other in an embodiment of the present invention;
FIG. 10 is a schematic diagram showing a system for multi-casting layered coded data in a multi-quality layered video service system in an embodiment of the present invention; and
FIG. 11 is a diagram showing a conventional IP multi-cast system.

### DESCRIPTION OF THE PREFERRED EMBODIMENT

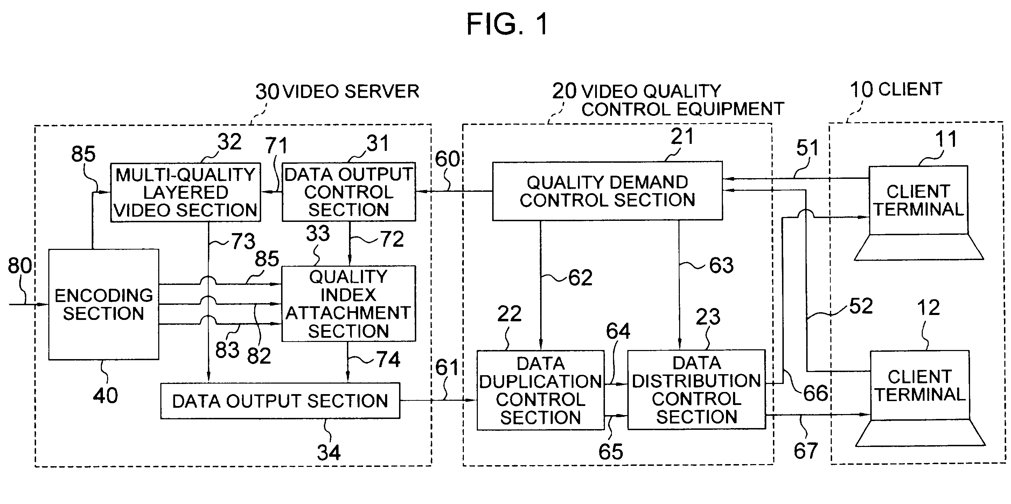

An embodiment according to the present invention will hereinafter be described with reference to the drawings. FIG. 1 of the accompanying drawings is a block diagram showing a multi-quality layered video service system according to an embodiment of the present invention.

As shown in FIG. 1, the multi-quality layered video service system according to the present invention comprises a video server 30 for serving a video program composed of video and audio data or the like, a video quality control equipment 20 capable of changing a quality of video program on the network and a client 10 for receiving and reproducing a video program based on a video program demand. More in detail, the video server 30 comprises an encoding section 40 for encoding an analog video program, a data output control section 31 for controlling the data output, a multi-quality layered video section 32 for storing and holding coded program data, a quality index attachment section 33 and a data output section 34. Also, the video quality control equipment 20 comprises a quality demand control section 21, a duplication control section 22 and a data distribution control section 23. Further, the client 10 comprises a plurality of client terminals. In this embodiment, a plurality of client terminals assume two client terminals. In this assumption, an operation of a multi-quality layered video service system according to the embodiment of the present invention will be described hereinafter.

The multi-quality layered video service system shown in FIG. 1 is a system for serving the same video program based on video program output demands from one or a plurality of clients 10. In the video server 30, initially, the encoding section 40 encodes the analog video program by a scalable coding method, the multi-quality layered video section 32 stores and holds layered-coded video program data, and the quality index attachment section 33 stores and holds coded information such as a flag for identifying each layer and a data transmission rate of each layer.

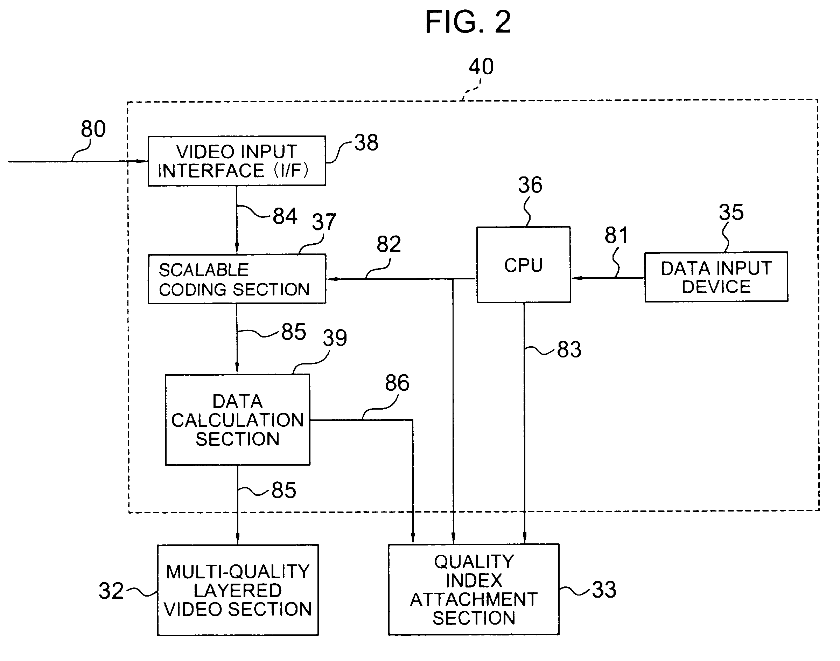

FIG. 2 is a block diagram showing the manner in which video program data is coded and stored and coded information is stored. In the encoding section 40 shown in FIG. 2, initially, a data input device 35 inputs data for designating a scalable coding method.

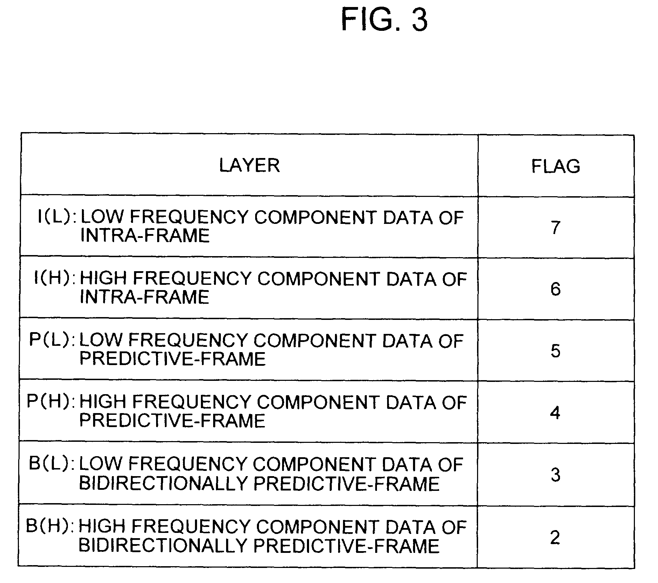

FIG. 3 shows examples of data inputted from the data input device 35. The example of FIG. 3 shows the manner in which pictures of I picture, P picture and B picture are coded by two layers of a low frequency component (L) and a high frequency component (H), and also shows the manner in which flags 7 to 2 are assigned to each layered data. As shown in FIG. 2, a data signal 81 indicative of the number of layers and the flag inputted from the data input device 35 is transmitted through a CPU (central processing unit) 36 to the scalable coding section 37 and the quality index attachment section 33 as layer number data 82. Flag data is transmitted to the quality index attachment section 33 as flag data 83. After the layer number is set in the scalable coding section 37, the video server 30 receives, at a video input interface (I/F) 38, the analog video signal 80 for encoding by a scalable coding method. The video input interface 38 transmits the video program thus received to the scalable coding section 37 as a video program signal 84. The scalable coding section 37 encodes the video program signal 84 by the scalable encoding method designated by the aforementioned data input device 35, and transmits the data 85 encoded by the scalable coding to a data calculation section 39. The data calculation section 39 calculates a data transmission rate for each layer, and transmits the data transmission rate thus calculated to the quality index attachment section 33 as a data transmission rate information signal 86 of each layer. Also, the data calculation section 39 transmits the data 85 encoded by the scalable coding to the multi-quality layered video section 32. The multi-quality layered video section 32 stores and holds the data 85 encoded by the scalable coding thus transmitted. The quality index attachment section 33 forms combinations of a total data transmission rate of each video quality and flags necessary for realizing the reproduction of each quality from the layer number data 82 inputted from the data input device 35, the flag data 83 and each layer data transmission rate information 86 from the data calculation section 39.

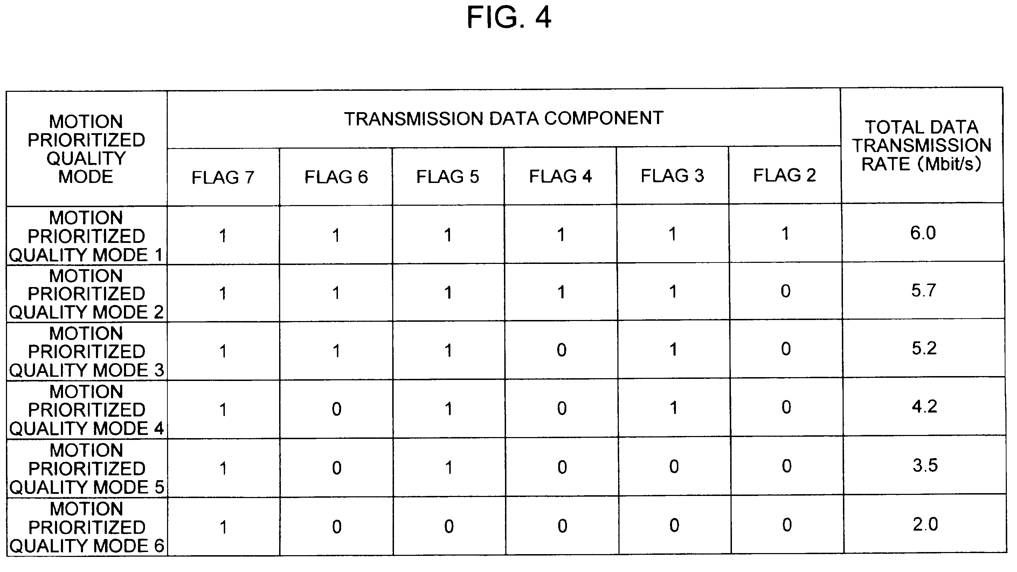

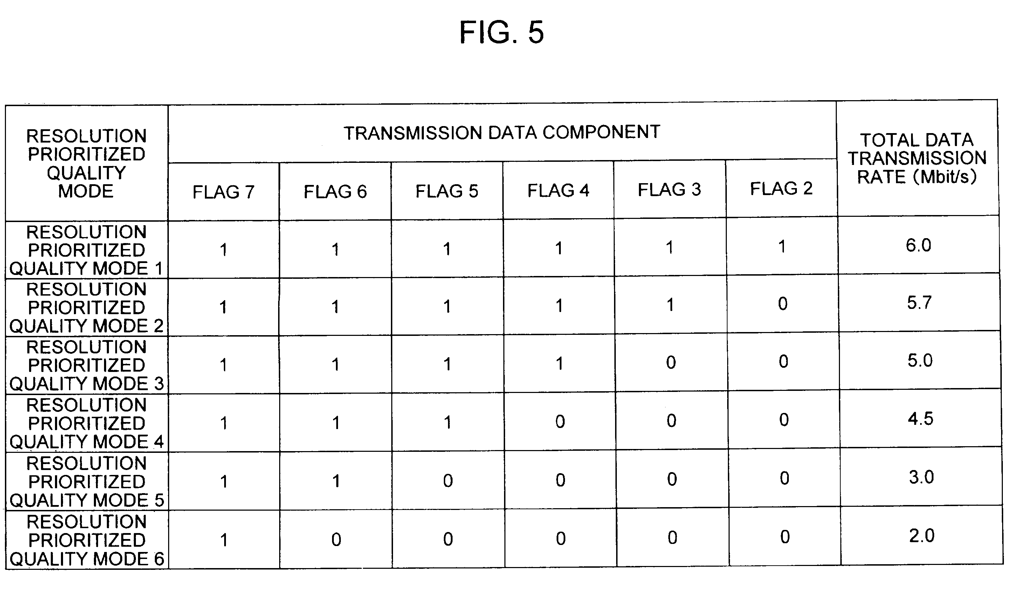

FIGS. 4 and 5 show tables of flags necessary in respective qualities and total data transmission rates thus formed. A study of FIGS. 4 and 5 reveals that two kinds of quality modes of motion prioritized mode and resolution prioritized mode are set in this embodiment.

In the motion prioritized mode shown in FIG. 4, there are set motion prioritized quality modes of six stages ranging from a motion prioritized quality mode 1 to a motion prioritized quality mode 6. Flags 7 to 2 in FIG. 4 represent low frequency components and high frequency components of respective I, P and B pictures as mentioned before in FIG. 3. While reference numerals 1 are attached to all components from the flags 7 to 2 in the quality of the motion prioritized mode 1, for example, these reference numerals 1 mean that the quality of the motion prioritized mode 1 contains six components of low frequency components and high frequency components of all I, P, B pictures. Also, in the quality of the motion prioritized mode 3, for example, the I picture contains both of the low frequency components and the high frequency components, and the P picture and the B picture contain only the low frequency components. A total data transmission rate on the right-hand end column of the table shown in FIG. 4 represents a value which results from accumulating respective layer data transmission rates from the data calculation section 32 in FIG. 2. In the quality of the motion prioritized mode 1, for example, there is illustrated the total data transmission rate of 6.0 Mbit/s. In the quality of the motion prioritized mode 4, for example, there is illustrated the total data transmission rate of 4.2 Mbit/s.

In the resolution prioritized mode shown in FIG. 5, there are set resolution prioritized quality modes of six stages ranging from the resolution prioritized mode 1 to the resolution prioritized mode 6. The flags and the total data transmission rate in FIG. 5 represent meanings similar to those described in FIG. 4. That is, while the quality of the resolution prioritized mode 3 contain the low frequency components and the high frequency components of I and P pictures, the B picture contains neither the low frequency component nor the high frequency component. Also, a total data transmission rate means that there exist data of 5.0 Mbit/s.

Next, the manner in which video programs are served in response to video program serving demands from the two client terminals will be described with reference to FIG. 1.

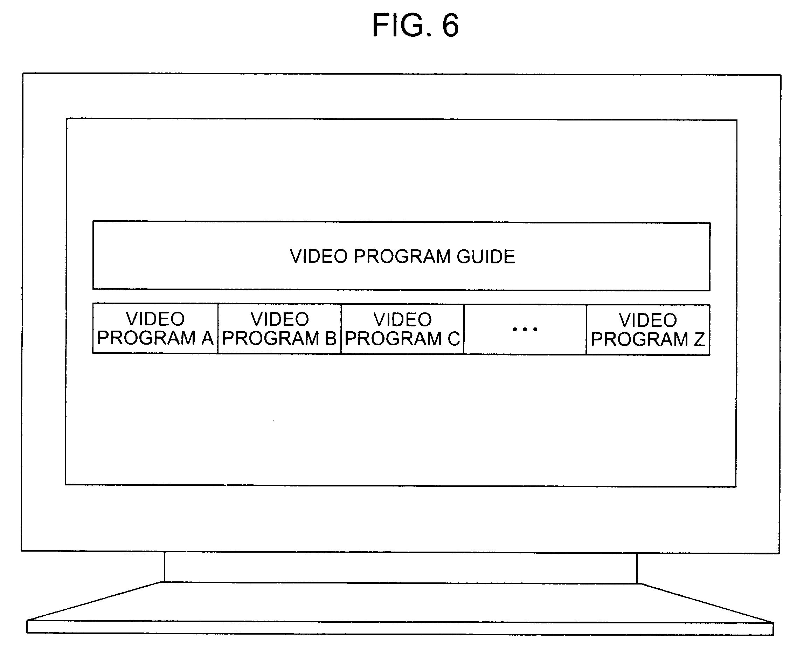

Initially, the video program client terminals 11 and 12 issue desired video program serving demands to the video server 30 by using the video program serving demand signals 51, 52. FIG. 6 shows a state in which examples of video programs that can be selected from the video program guide are displayed on the client terminals 11 and 12. Initially, a viewer selects a desired video program on the video program selection picture shown in FIG. 6. For example, let it be assumed that the client terminals 11 and 12 select a video program A. In this case, the client terminals 11 and 12 issue a serving demand of the video program A to the video server 30. When the video program client terminals 11 and 12 issue the video program serving demands to the video server 30, the video program serving demands are transmitted through the quality demand control section 21 within the video quality control equipment 20 existing on the network to the data output control section 31 within the video server 30 as the video program serving demand signal 60. The quality demand control section 21 stores and holds information of video programs demanded by the video program client terminals 11 and 12 in the internal memory. That is, the video quality control equipment 20 stores and holds information indicating that the video program A is demanded by the client terminals 11 and 12. The quality demand control section 21 transmits data indicative of making a duplication to serve video program data to a duplication control section 22 by using a control signal 62. Further, a data distribution control section 23 is controlled by a control signal 63 in such a manner that data duplicated by the duplication control section 22 is served to the client terminals 11 and 12.

When the data output control section 31 within the video server 30 receives the video program service demand signal 60, the data output control section 31 instructs the quality index attachment section 33, which stores and holds coding information such as flags of respective layers in which video programs are coded and data transmission rates for respective layers, by using a control signal 72 in such a manner that the quality index attachment section 33 outputs coding format information. When the quality index attachment section 33 receives the coding format information output instruction signal 72 from the data output control section 31, the quality index attachment section 33 transmits the coding format information thus stored and held such as the flags of the respective layers and the data transmission rates of the respective layers, i.e. information described in FIGS. 4 and 5 to the data output section 34 as a coded information signal 74. The data output section 34 encapsulates the coding format information received from the quality index attachment section 33 into a packet, and transmits the same to the video quality control equipment 20 as the coding format information signal 61. The duplication control section 22 within the video quality control equipment 20 stored and holds the coding format information signal 61 received from the data output section 34, i.e. the coding information such as the flags of the respective quality modes and the data transmission rates of the respective quality modes in the internal memory, duplicates the coding format information, and transmits duplicated coding format information signals 64 and 65 to the data distribution control section 23. The data distribution control section 23 transmits the coding format information transmitted from the duplication control section 22 to the client terminals 11 and 12 as the coding format information signals 66 and 67.

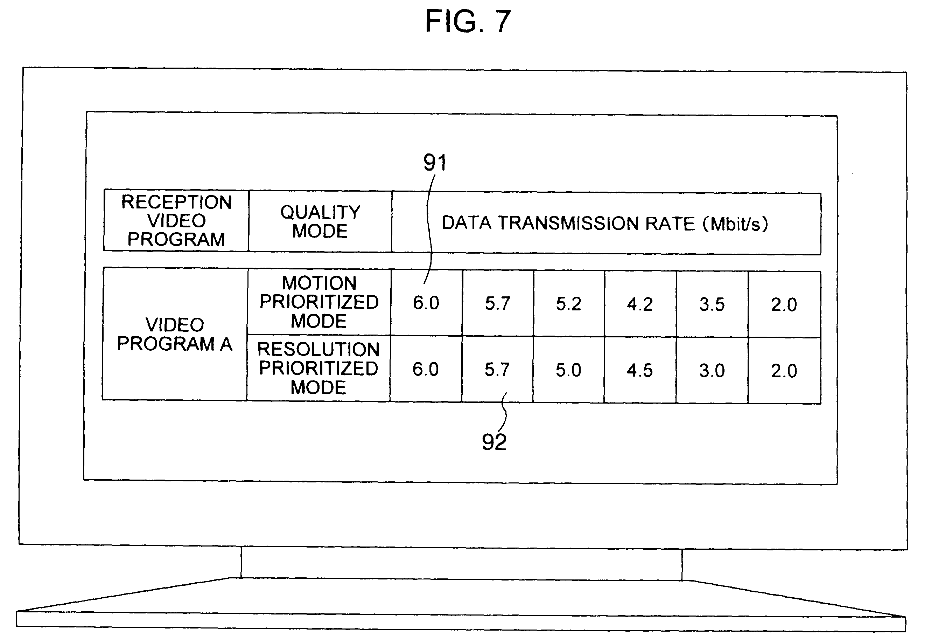

When the client terminals 11 and 12 receive the coding format information signals 66 and 67, the client terminals 11 and 12 display the picture shown in FIG. 7 on the display screen. Since the user initially demands the service of the video program A, there are displayed a quality mode that can be provided in the video program A and a data transmission rate on the display screen. Then, the user selects a quality mode and a reception data transmission rate corresponding to the video program A shown in FIG. 7.

In actual practice, the user selects the right-hand side data transmission rate portion on the picture of FIG. 7 displayed on the display screen of the client terminals, i.e. a quality of 6.0 Mbit/s at the motion prioritized quality mode 91 (i.e. "motion prioritized mode 1" in FIG. 4) is selected in the client terminal 11. Also, a quality of 5.7 Mbit/s at the resolution prioritized quality mode 92 (i.e. "resolution prioritized mode 2" in FIG. 5) is selected in the client terminal 12. In this case, the client terminals 11 and 12 issue the video program demands with the selected quality modes to the video server 30 by using the demand signals 51 and 52.

When the client terminals 11 and 12 issue the video program demands with the quality modes selected by the respective client terminals 11 and 12 to the video server 30, a video program output instruction is supplied through the quality demand control section 21 within the video quality control equipment 20 existing on the network to the data output control section 31 within the video server 30 as the video program service demand signal 60. The quality demand control section 21 stores and holds quality mode information of the video programs demanded by the video program client terminals 11 and 12 in the internal memory. The quality demand control section 21 stores and holds the information such that the client terminal 11 ordered the quality mode information indicating that the quality mode video program of 6.0 Mbit/s in the motion prioritized quality mode of the video program A in the internal memory, and the information such that the client terminal 12 ordered the quality mode information indicating that the quality mode video program of 5.7 Mbit/s in the resolution prioritized quality mode of the video program A in the internal memory.

Also, the quality demand control section 21 transmits the quality information demanded by the video program client terminals 11 and 12 to the duplication control section 22 by using the control signal 62. Further, the quality demand control section 21 controls the data distribution control section 23 by the control signal 63 in such a manner that the data distribution control section 23 may serve data generated by the duplication control section 22 to the client terminals 11 and 12.

When the data output control section 31 within the video server 30 receives the video program service demand signal 60, the data output control section 31 transmits a demanded video program output instruction to the multi-quality layered video section 32 which stores and holds the video program data encoded by the scalable coding method through the control signal 71. When the multi-quality layered video section 32 receives the video program output demand signal 71 from the data output control section 31, the multi-quality layered video section 32 transmits the stored and held video program data encoded by the scalable coding method to the data output section 34 as the coded data signal 73. The data output section 34 encapsulates the layered-coded data received from the multi-quality layered video section 32 into the packet by assigning the flag of each layer, and transmits the resultant packets to the video quality control equipment 20 as the coded data signal 61. Incidentally, as a system for assigning the flag of each layer, there may be used a TOS (Type of Service) field within the header of IP packet when the data encoded by the scalable coding method is encapsulated into the IP packet, for example.

The duplication control section 22 within the video quality control equipment 20 compares the video program quality modes, demanded by the client terminals 11 and 12, transmitted from the quality demand control section 21 with the coding format information initially received from the video server 30, and forms (duplicates) layered-coded data necessary for serving the video programs of the quality modes demanded by the client terminals 11 and 12 from the received layered-coded data 61.

In this embodiment, since the client terminal 11 demands the quality mode of 6.0 Mbit/s in the motion prioritized quality mode of the video program A, the duplication control section 22 duplicates data of packets having the flags 7 to 2 (i.e. all packets), and transmits the data thus duplicated to the data distribution control section 23 as the video program data 64 demanded from the client terminal 11. Accordingly, in this case, the quality mode need not be changed and the received data is transmitted to the data transmission section 23 as the demanded video program data 64 as it is. Also, since the client terminal 12 demands the quality mode of 5.7 Mbit/s in the resolution prioritized mode of the video program A, the duplication control section 22 duplicates data other than data of the high frequency component of the B picture, i.e. data except the packet having the flag 2 from the received data encoded by the scalable coding method 61, and transmits the data thus duplicated to the data distribution control section 23 as the video program data demanded from the client terminal 12. The data distribution control section 23 transmits the data encoded by the scalable coding method 64 and 65 transmitted from the duplication control section 22 to the client terminals 11 and 12 as the video program service data signals 66 and 67.

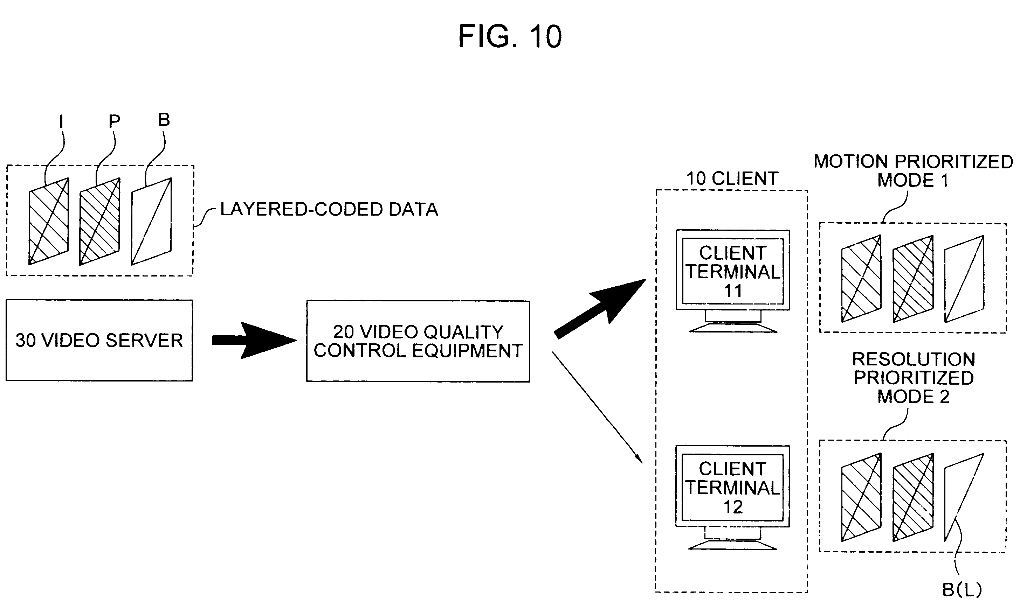

FIG. 10 illustrates the state in which the video program A is multicast on the client terminal 11 which demands the quality mode of "motion prioritized quality mode 1" selected from the video server 30 and the client terminal 12 which demands the quality mode of "resolution prioritized quality mode 2" selected from the video server 30. As described above, the high frequency component of the B picture is not transmitted to the client terminal 12. The client terminals 11 and 12 receive the video program data signals 66 and 67 outputted from the video quality control equipment 20, and display the video program data thus received on the display screens thereof.

While the display size of video program displayed by the reception terminal has not been described so far, it is possible to automatically set the quality mode of the received video program based on the display size of video program displayed on the client terminal. For example, if the display size of the video program displayed on the client terminal is less than a certain size, it is possible to construct the system in such a manner that the system may automatically receive video program data of the quality modes having only the low frequency components of the I, P, B pictures, i.e. the video program quality of the motion prioritized quality mode 4. Also, the system may be extended even when the client terminal receives a plurality of video programs.

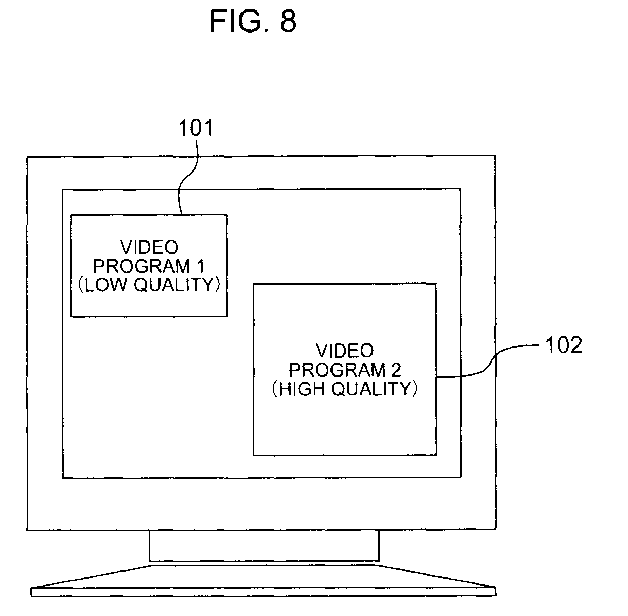

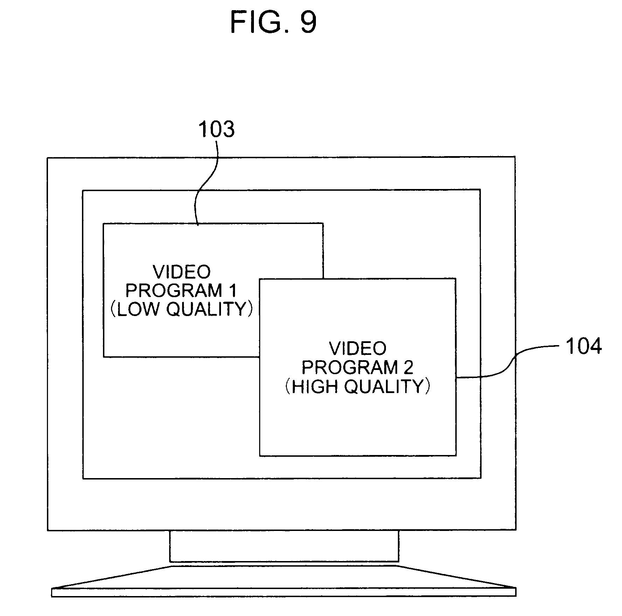

FIGS. 8 and 9 are respectively pictorial representations showing the manner in which video programs are displayed on the display screen of the client terminal when the client terminal receives a plurality of (two video programs) video programs.

FIG. 8 shows the manner in which two video programs are received through the coded data signal 66, i.e. a video program 1 denoted by reference numeral 101 is reproduced and displayed on a small window and a video program 2 denoted by reference numeral 102 is reproduced and displayed on a large window. When the display sizes of the received video programs are different as described above, the video server 30 may be demanded by the video program demand signal 51 so as to serve video programs in such a manner that a video program which is to be displayed in maximum size may be displayed with a video program quality designated by the user or with the best quality that can be provided and that video programs which are to be displayed in other sizes may be displayed with a quality lower than that of the video program displayed in maximum size or with the lowest quality that can be provided.

FIG. 9 shows the manner in which a video program denoted by reference numeral 104 is reproduced and displayed on the front window and a video program 1 denoted by reference numeral 103 is reproduced and displayed on the rear window. When the displayed positions of the received video programs on the display screen are different as described above, the video server 30 may be demanded by the video program demand signal 51 so as to serve video programs in such a manner that a video program which is to be displayed on the front may be displayed with a video program quality designated by the user or with the best quality that can be provided and that video programs which are to be displayed at other positions may be displayed with a quality lower than that of the video program displayed on the front or with the lowest quality that can be provided.

As described above, according to the multi-quality layered video service system in one aspect of the present invention, a video program which is to be served is layered-coded, the flag is assigned to each layer, and then the video program is served. Also, in order to reproduce video programs with a plurality of quality modes, information indicating a combination of flags for serving data necessary for reproducing video programs with respective quality modes are served together with video programs data. Therefore, there can be achieved the effects to provide the video program transmission and reception system capable of reproducing video programs with a plurality of quality modes from one stream data which results from video programs data encoded by the scalable coding method.

Having described a preferred embodiment of the invention with reference to the accompanying drawings, it is to be understood that the invention is not limited to that precise embodiment and that various changes and modifications could be effected therein by one skilled in the art without departing from the spirit or scope of the invention as defined in the appended claims.

## Claims

1. A video program serving system comprising:
a video server (30); and
a video quality control equipment (20) connected to said video server (30) and a plurality of client terminals (11, 12) through a network, wherein said video server (30) includes means (34) for encapsulating video data, encoded by a scalable coding method, into packets and outputting said packet with a flag for each layer, and said video quality control equipment (20) includes means (22) for duplicating data, which results from combining encoded data of different layers, from one video data, encoded by the scalable coding method, received from said video server (30) and for transmitting it for each client terminal.

2. A video program serving system according to claim 1, wherein said video server (30) includes means (33) for measuring a combination of said flags and data transmission rates of encoded data corresponding to said combination and means (34) for transmitting information concerning said measured data transmission rate through said video quality control equipment (20) to a client terminal (11, 12).

3. A video server (30) comprising:
means (34) for encapsulating video data, encoded by a scalable coding method, into packets and outputting said packet with a flag assigned for each layer; and
means (33) for encapsulating information concerning a combination of flags and a data transmission rate of data, encoded by the scalable coding method, corresponding to said combination into packets and outputting said packets.

4. A video server (30) according to claim 3, further comprising means (40) for measuring a data transmission rate for each layer of said video data encoded by the scalable coding method.

5. A video quality control equipment (20) comprising:
means (22) for duplicating video programs of quality different for each client terminal (11, 12), from one video data, encoded by a scalable coding method, received from a video server (30) and serving said duplicated video programs.

6. A video quality control equipment (20) according to claim 5, further comprising means (22) for duplicating data which results from combining encoded data of different layers for each client terminal (11, 12), from one video data, encoded by the scalable coding method, received from a video server (30) and transmitting said duplicated data.

7. A video program receiving apparatus (10) comprising:
means (11, 12) for receiving information concerning a data transmission rate obtained when a video program transmitted from a video server (30) is displayed with a first quality mode and information concerning a data transmission rate obtained when said video program is displayed with a second quality mode lower than said first quality mode and displaying said information on a display screen; and
means for selecting said first quality mode and said second quality mode from said display screen.

8. A video program receiving apparatus according to claim 7, further comprising:
means (11, 12) for receiving first and second video programs from said video server (30) through a network and displaying said first and second video programs on said display screen in a multi-window fashion; and
means for demanding that said first video program is served with said first quality mode and said second video program is served with said second quality mode when a window size for displaying said first video program is larger than a window size for displaying said second video program.

9. A video program receiving apparatus according to claim 7, further comprising:
means (11, 12) for receiving first and second video programs from a video server (30) through a network and displaying said first and second video programs on said display screen in a multi-window fashion; and
means for demanding that said first video program is served with said first quality mode and said second video program is served with said second quality mode when a window for displaying said first video program is located ahead of a window for displaying said second video program.
